# EUROPEAN PATENT SPECIFICATION

(11) **EP 1 053 536 B1**
(45) Date of publication and mention of the grant of the patent: **10.09.2003**
(21) Application number: 99903819.3
(22) Date of filing: 02.02.1999
(51) Int. Cl.: G07F 7/10

(54) **SYSTEM AND METHOD FOR CONTROLLING ACCESS TO COMPUTER CODE IN AN IC CARD**
SYSTEM UND VERFAHREN ZUR KONTROLLE DES ZUGANGS ZU DEM COMPUTERCODE IN EINER CHIPKARTE
SYSTEME ET PROCEDE DE COMMANDE D'ACCES A UN CODE D'ORDINATEUR DANS UNE CARTE A CIRCUIT INTEGRE (IC)

(30) Priority: 03.02.1998 US 73566 P
(43) Date of publication of application: 22.11.2000
(73) Proprietor: Mondex International Limited, London EC4M 5SQ (GB)
(72) Inventor: MARKAKIS, Dimitrios, Cleveland Grove, London E1 4XF (GB); HOCHFIELD, Barry, Giffnock, Glasgow G46 6RB (GB); ROBERTS, Dave, London NW2 2AP (GB); BERIC,John, Appleton, Warrington WA4 5RD (GB)
(74) Representative: Robson, Aidan John
(86) International application number: GB9900350
(87) International publication number: WO99040549

(56) References cited:
- EP-A- 0 152 024
- EP-A- 0 190 733
- EP-A- 0 466 969
- WO-A-87/07062
- WO-A-88/09019
- WO-A-92/13322
- FR-A- 2 687 816
- US-A- 5 682 027

## Description

### BACKGROUND OF INVENTION

Integrated circuit cards are becoming increasingly used for many different purposes in the world today. An IC card typically is the size of a conventional credit card on which a computer chip is embedded. It comprises a microprocessor, read-only-memory (ROM), electrically erasable programmable read-only-memory (EEPROM), an Input/Output (I/O) mechanism and other circuitry to support the microprocessor in its operations. An IC card may contain one or more applications in memory. An application loader is the entity which loads the application on the card. The application loader may be the actual developer of the application or may be a third party.

WO-A-88/09019 discloses a microprocessor with memory and interfacing capabilities. A memory management routine permits various objects in the card to be protected from unauthorised or improper access by an application programme. Security flags relating to data files are stored on the card. These are stored in the data files themselves forming part of the file header (see page 16, lines 31 to 33). During the execution of an application programme the state of the security flags may change. This system is useful for protecting data and ensuring the data is only accessed at the correct times.

MULTOS™ is a multiple application operating system which runs on IC cards, among other platforms, and allows multiple applications to be executed on the card itself. This allows a card user to run many programs stored in the card (for example, credit/debit, electronic money/purse and/or loyalty applications) irrespective of the type of terminal (i.e., ATM, telephone and/or POS) in which the card is inserted for use. Of utmost importance in using such a card is security, and the operator of a card system enables cards to securely communicate with terminals or other cards. The operator also manages application loading and deleting from cards and the cryptographic keys which make the system secure.

IC cards typically have limited storage capacity due to the size and cost restraints of locating memory on the card. Applications for multiple-application smart cards are written in programming language and are typically stored int eh EEPROM whose contents can be changed during the lifetime of the card. One example of programming language used in IC cards is Multos Executable Language MEL™. The MEL program instructions are read from EEPROM when they are executed and are interpreted by the operating system stored in ROM

The ROM on the IC card includes the operating system written in assembler language code for the particular integrated circuit configuration (native language type
code). The operating code stored in ROM is fixed when the ROM is initially written and the information stored in ROM will not change for the life of the card.

Also present in ROM can be subroutines called primitives written in a native language code for the microprocessor which can be called by either the operating system itself or by applications when they are executed. Primitives are written in the native language (i.e. assembler language) so that they can be executed very quickly and minimal interpretation of the instructions is necessary for execution. These primitives are collections of instructions which typically perform a desired function, such as a mathematical or cryptographic function. The instructions are never changed during the lifetime of the card. Any data used or accessed by the primitives are stored in EEPROM so that the contents of the data elements can change as necessary.

In the MULTOS™ system, applications can call primitives stored on the card which then are executed by the operating system. For example, if an application needs to divide two numbers, the application can call the "divide" primitive and provide the operands for the function and the primitive will execute the calculation. Every application on the card has the ability to call the divide primitive by executing an "access divide primitive" instruction. While some primitives are necessary to almost all applications, such as basic mathematical formulas or basic data retrievals, some primitives are optional and are intended to be used by only some applications. For example, security related primitives which encrypt/decrypt data may be used by some applications (e.g., a bank application) but not others (e.g., an air miles or entertainment application) due to the needs of the individual application.

Additionally, external considerations may impact the permitted use of some primitives by an application. These considerations would require the operator of the card system to have control over (i.e. prevent) access to certain primitives by individual applications. One such consideration is an individual country's concerns about strong encryption algorithms for certain types of applications being used in the country and being exported from the country. For example, the United Kingdom may allow an encryption algorithm which is part of a primitive to be exported out of the country if the algorithm is used for a banking function. However, if the encryption algorithm is used on general data such as health information, the United Kingdom's public policy may dictate that the encryption algorithm cannot be used outside its borders. Thus, it would be advantageous to disable the encryption primitive for that application if a country's laws prohibit that type of data being encrypted and exported. This selective enabling of primitives for individual applications would be a powerful mechanism to control the card system.

There are other reasons to provide selective access to different primitives. Specifically, it would be desirable to have an access check for different primitives to selectively enable primitives depending upon the needs of the card system operation and/or of the providers of the applications which run on the system. For example, an I/O port "access flag" could be checked when a selected primitive is called. Most IC cards currently can exchange information with a terminal by physically connecting an I/O port on the card with the terminal. The contacts located on the card are physically pressed against the terminal contacts so that an electrical signal can pass between the card and terminal. Recent developments allow an IC card to communicate with a terminal without establishing a physical contact between the card and the terminal. The exchange of information is established by radio frequency (RF) waves, cellular signals or other transmitted signal. For contactless cards an antenna is present on the card to transmit and receive the transmission signals. IC cards can contain both the physical contacts and the antennas for wireless communication. Although transferring information in a contactless or wireless manner is advantageous to the card holder by expediting the overall transaction time, the transmission signals are more susceptible to interception by a third party than if a physical connection were made. As a result, the operator of the card system may want to limit particular application programs such as financial transactions to physical connections.

Therefore, it is an object of an embodiment of the invention to provide a multi-application card with the ability to control access to the primitives and to allow the card system operator to enable or disable or prevent access to a primitive for a particular application.

Aspects of the invention are disclosed in independent claim 1,5 and 12.

### SUMMARY OF THE INVENTION

The applicants have thus invented a system and method for controlling access to computer code and specifically, but not exclusively, to primitives embedded on a multi-application IC card. The applicants have determined that one way to achieve this objective is by use of "access flags," which, as explained in more detail below, are set in bits for indicating either that a primitive (e.g., an encryption primitive) is accessible to a particular application (if, for example, the bit is set at 1) or it is not (if the bit = 0). In the case of an encryption-related primitive, the "access flag" may be referred to as a "crypto flag."

Access flags related to I/O could also be used to prevent access to the contactless primitives for financial applications. The I/O access flags would be controlled and set by the card system operator and loaded onto the card by the application loader at the time the application is loaded onto the card. This access flag would allow the operator of the card system to prevent a financial or other selected application from using the contactless primitive and thus a physical connection would be required for terminal communication.

Access flags which are stored on the card and checked by the operating system allow the operator of the card system to control access to selective primitives or other subroutines by checking the status of the access flag prior to executing the primitive or subroutine. Other subroutines such as codelets (subroutines written in an application language such as MEL), subroutines in the operating system itself or other types of subroutines could also have associated access flags. The checking of the access flag is preferably performed by the operating system when a specific subroutine call instruction is executed by an application or other instruction. Depending upon the results of the access flag check, the application either executes the primitive or subroutine in question or performs another series of instructions if access is denied.

The access flags are stored with application control data which is stored in EEPROM when the application is loaded onto the card. Preferably, the flag's default setting is to "not enabled" prior to loading but the operator of the card system can set the flag to a logic "1" to indicate "enabled" if desired. For example, if an application is programmed to call a strong encryption subroutine in Country B which is outside of Country A where the algorithm was developed, the application provider might be required by the card system operator to show a certificate from the country where the card will be used showing that the application provider received permission from the government of Country A (export license) and Country B (use license) to use the encryption primitive. Upon showing of the certificate, the card operator enables the access flag bit. In this case, the "access flag" could be termed a "crypto flag" because it relates to encryption.

### BRIEF DESCRIPTION OF THE DRAWINGS

Further objects, features and advantages of the invention will become apparent from the following detailed description taken in conjunction with the accompanying figures showing illustrative embodiments of the invention, in which
Fig. 1 is a block diagram illustrating the three states in the life of a multiapplication IC card in a secure system;
Fig. 2 illustrates an integrated circuit card which can be used in connection with embodiments of this invention;
Fig. 3 is a functional block diagram of the integrated circuit shown in Fig. 2;
Fig. 4 is a bit map of an application control data structure in accordance with an embodiment of the present invention; and
Figure 5 is a flow chart of a method for controlling access to computer code.

Throughout the figures, the same reference numerals and characters, unless otherwise stated, are used to denote like features, elements, components or portions of the illustrated embodiments. Moreover, while embodiments of the subject invention will now be described in detail with reference to the figures, it is done so in connection with the illustrative embodiments. It is intended that changes and modifications can be made to the described embodiments without departing from the true scope and spirit of the subject invention as defined by the appended claims.

### DETAILED DESCRIPTION OF THE PREFERRED EMBODIMENT

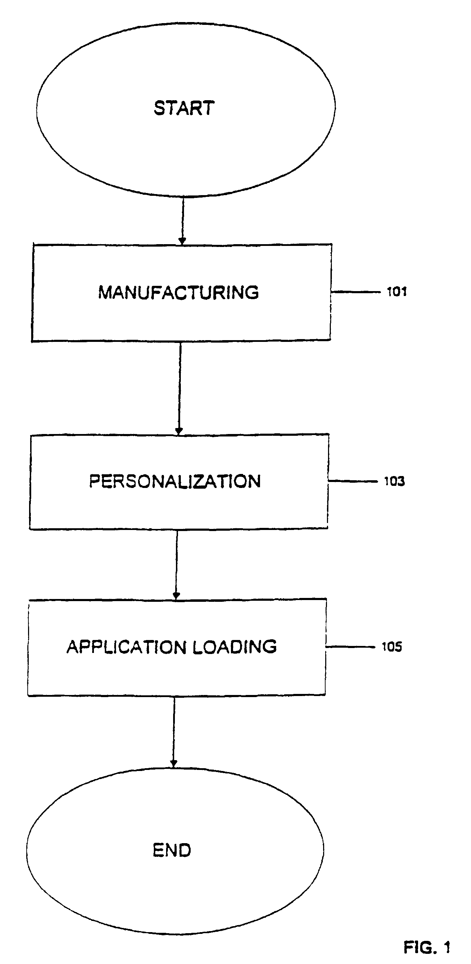

Figure 1 shows the three steps involved in providing an operational multi-application IC card in a secure system. The first step is the card manufacturing step 101. The second step is the personalization step 103 where card personalisation data (also called entity authentication data) is loaded onto the card. The third step is the application loading step 105 which checks to see if a card is qualified to receive an application, i.e., when the personalisation data is checked against the application permissions data associated with the application to be loaded. Each of these three steps is described in detail in co-pending application serial number 09/076,551, incorporated herein as Annex A.

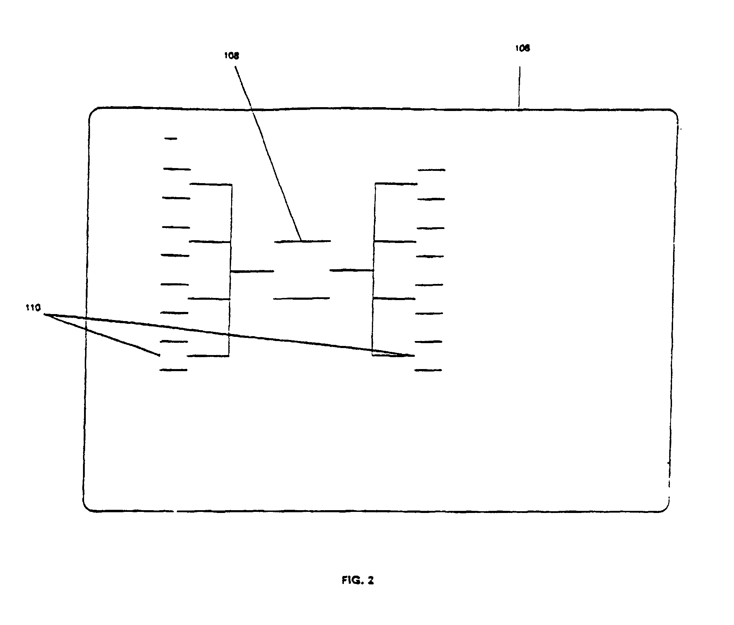

Figure 2 illustrates a card 106 incorporating integrated circuit technology that can be used with embodiments of the presently claimed invention. Card 106 looks similar to a conventional credit card, but also includes integrated circuit (IC) 108, which contains a microprocessor, and electrical contacts 110 for communication between IC 108 and devices external to card 106. Card 106 can be used for example, as a credit card, a debit card, and/or as an electronic cash card, i.e., a card containing monetary value that can be transferred when the cardholder makes purchases, for example, a MONDEX™ cash card.

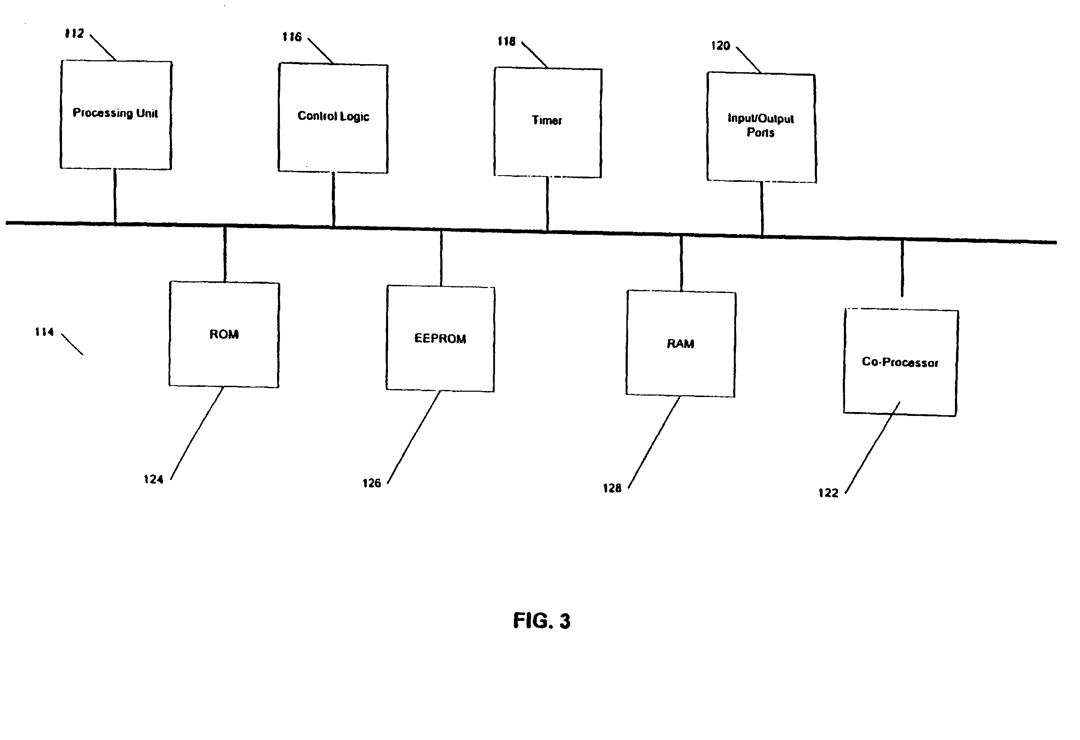

Figure 3 is a functional block diagram of the IC section 108 and contains at least processing unit 112 and memory unit 114. Preferably, IC 108 also includes control logic 116, a timer 118, and input/output ports 120. IC section 108 can also include a coprocessor 122. Control logic 116 provides, in conjunction with processing unit 112, the control necessary to handle communications between memory unit 114 (having ROM 124, EEPROM 126, and RAM 128 and input/output ports 120). Timer 118 provides a timing reference signal for processing unit 112 and control logic 116. Co-processor 122 provides the ability to perform complex computations in real time, such as those required by cryptographic algorithms.

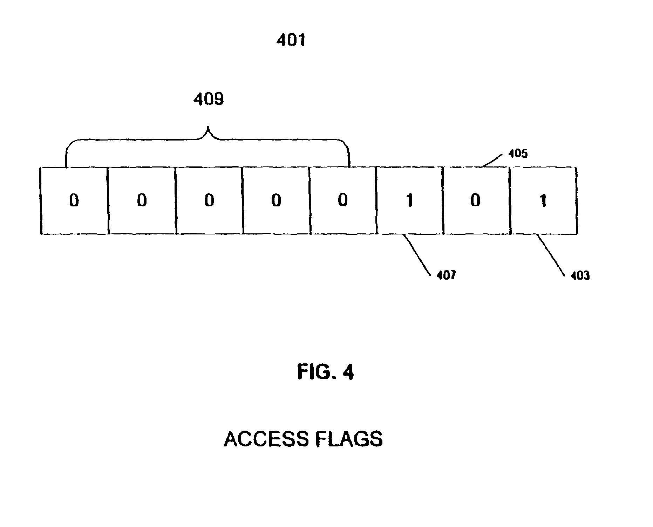

Figure 4 shows an example of an application control data structure 401 sometimes called a bit-map preferably residing in EEPROM and containing multiple access flags for a particular application which was loaded onto an IC card. The bit-map preferably resides in EEPROM with the application, although it could reside in ROM if the access flags were determined before the time the data was written to ROM. Data 401 shows 8 bits (one byte) of data which is stored in the memory of the card. The length of the bit map can be variable with the length of available bits, depending upon the particular application and the system upon which it runs. In the present example, bit 403 corresponds to a crypto flag associated with an encryption primitive which was described above. The crypto flag bit is set to "1" if the encryption primitive is enabled for the particular application and is set to "0" if the primitive is not enabled. The default state in the preferred embodiment is always "0" to not enabled. This ensures that permission to execute a selected primitive is not given unless it is explicitly set by the operator of the card system when the application is loaded. However, in other systems the default could be "1" or enabled unless the operator of the card system explicitly disables the card.

The contactless I/O access flag bit, also described above, is shown as bit 405. This bit is checked when the contactless operation (for example, a primitive) is invoked by an application. The contactless operation may be, for example, all of the instructions required to transmit and receive wireless signals or may be a required portion of those instructions. If the contactless bit 405 is set to "1" then the operation can be executed and if the contactless bit 405 is set to "0" then the contactless operation cannot be executed.

Other different I/O ports can also have an access flag. The contactless access flag can also have additional flags for more refined control, an RF signal access flag and a cellular access signal. For example, another access flag bit shown in Fig. 4 is Application Program Interface (API) bit 407. This bit can control whether an application can be ran by a specific API stored on the card. For instance, a card may contain a MEL API and a second operating system API. The API bit may restrict applications to using the MEL API or may enable the card to use the second operator system API. The use of the second operating system API by the particular application may require an issued license from the owner of the second operating system and the API flag can restrict the card from using the second API unless a license is obtained. Other access flag bits 409 can be defined by the system operator.

Although Figure 4 shows multiple access flags, the presence of at least one access flag is advantageous and the total number of access flags can be tailored to the system or user. In addition, although a crypto flag is an important feature for the IC card which is an embodiment of the invention, a crypto flag is not required to be one of the access flags. The determination of what each access flag controls is directed by the system operator. While Figure 4 shows a preferred bit representation of one bit for each access flag, the data organization can be different such as using the access list as an index register to point to the correct flag data.

Each application has its own associated bit-map list data as described in Figure 4. The bit-map data containing the access flags is loaded onto the card with other application load information during the application load process. A field which specifies the length of the bitmap can precede the access list to facilitate a variable length access list. Once the values on the bit-map are set, they are not changed in order to minimize any illicit tampering with the flag data.

Described below is a description of how the operating system checks if an access flag bit is set when an application attempts to call a primitive with an associated access flag. In this example, if the associated flag is set to "0" and the primitive is called, the execution will abnormally end (abend). The example illustrates the use of a crypto flag in particular.

The requirement is for a mechanism, in the form of a bitmap, that will allow the grant or restriction of access to the cryptographic primitives offered by a MULTOS™ implementation to an application. Access to the "restricted access" MULTOS™ cryptographic primitives will be given only to those developers who provide documentation indicating that they have obtained the permission of the appropriate government authorities to access these cryptographic primitives.

Interaction between the card with a card issuer (who typically is the entity that asks for an application to be loaded) in a multiple application card system is through the provision of an Application Load Certificate ("ALC") (described in as Annex A which is incorporated herein by reference) which is supplied to the card during the personalization process described with respect to Figure 1. The Application Load Certificate can contain access flag data for a particular application which associates a bitmap (or a flag) with an application in an integrity protected manner.

In the ALC, a data element preferably labeled "access-list" is used to indicate whether or not access to a particular primitive is available. More specifically, a single bit is preferably used to indicate the "access-list" flag stored on the IC card, although other data configurations can be used. Thus, if an application attempts to access a restricted (unavailable) cryptographic primitive (e.g. "access-list" value for that primitive with respect to the executive application equals 0), then the process will abend. If the process abends, execution of the application program currently running can be halted and an error message can be sent to a display terminal if connected to the IC card. Otherwise, access will be granted, the primitive's set of programming instructions will be executed, and then the application will continue with the execution of its instructions.

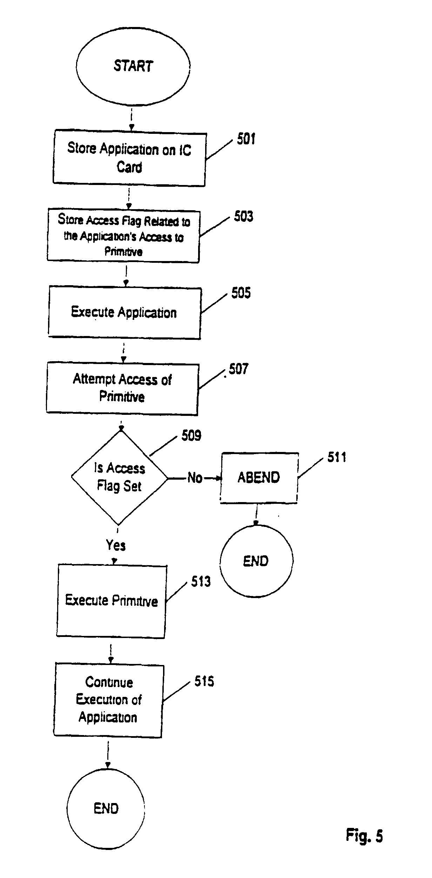

Figure 5 shows a flow chart of the steps for implementing a method of controlling access to computer code in an IC card. Step 501 stores an application on an IC card. The application can be stored on the card at the time of manufacture or preferably at a personalization process as described in Figure 1. The IC card includes a multiple application operating system which allows the microprocessor on the card to execute multiple applications stored on the card.

Step 503 stores an access flag related to a primitive, or some other set of programming instructions, for one or more applications stored on the IC card. The access flag can be stored prior to the application being loaded, concurrently with the application being loaded or after the application has been loaded. In order for maximum security, the access flag is stored in read-only-memory at the time of manufacture and cannot be altered. Alternatively, the access flag can be stored in programmable memory which can be altered to personalize the card with respect to the individual applications loaded on the IC card and in order to have the ability to remove the access flags when and if an application is deleted from the card. For example, with respect to a cryptographic access flag, an application provider may receive permission for the exporting and importing of certain cryptography stored as a primitive after an application has been loaded onto the card. In that case, the access flag may be changed if the memory which stores the access flag is alterable.

Step 505 executes one of the application programs stored on the card (e.g., a credit/debit application). If the program instructions in the executed application require that a primitive be accessed in step 507, the operating system resident on the IC card will first check the access flag associated with the particular primitive or function. Each primitive can have different access flags for each application or group of applications so that one application may be allowed access and a second application may not. The access flags give the manager of the multiple application card system important control over access to selected primitives.

Step 509 checks the condition of the appropriate access flag in step 509. If the access flag indicates that access is denied (eg., the value of the access flag is zero), then the executing application abnormally ends (abends) in step 511. An error message can be displayed to the card user giving the reason for the abend. Alternatively, the application through its programming instructions can be programmed for either a positive or negative access flag check and execute selected portions of the application in response to the value of the access flag.

If the access flag is set to a positive value (e.g., "1"), the primitive which has been accessed is executed in step 513. After the program instructions of the primitive have been executed, the process continues with step 515. Step 515 then continues the execution of the application which is currently being executed by the microprocessor on the IC card.

## Claims

1. A multiple application card system (106) including an integrated circuit card (108) comprising a microprocessor (112), a read-only memory (124), a random access memory (126), an electronically erasable programmable read-only memory (128), and one or more sets of programming instructions stored in said read-only memory comprising:
means for storing on said integrated circuit card (108) at least one application which accesses at least one of the sets of programming instructions;
means for storing an access flag with application control data for at least one of said sets of programming instructions accessed by the application;
means for setting the access flag to enable access to the set of programming instructions in dependence on the application loaded;
and means dependent on the access flag for allowing access to the set of programming instructions by the application.

2. The system of claim 1, wherein said means for storing access flags resides in said electronically erasable programmable read-only memory.

3. The system of claim 1 or claim 2, wherein at least one set of programming instructions is a cryptographic primitive.

4. The system of claim 3, wherein access to said cryptographic primitives is denied when the value of said access flag is set to 0 and is granted when set to 1.

5. An integrated circuit card comprising:
a microprocessor (112);
at least one memory (114) coupled to said microprocessor for storing at least one application program which accesses one or more sets of programming instructions and at least one access flag stored with application control data and associated with at least one of said one or more sets of program instructions; and
a multiple application operating system stored on said integrated circuit card and executed by said microprocessor which enables access to said one or more sets of program instructions responsive to said associated access flag's value.

6. The integrated circuit card of claim 5, wherein said at least one access flags are stored in a read-only memory.

7. The integrated circuit card of claim 5 or claim 6, wherein said one or more sets of programming instructions are stored in said read-only memory.

8. The integrated circuit card of any of claims 5 to 7, wherein said at least one application is stored in an electronically erasable programmable read-only memory.

9. The integrated circuit card of any of claims 5 to 8, wherein said access flag is stored in electronically erasable programmable read-only memory.

10. The integrated circuit card of any of claims 5 to 9, wherein at least one set of programming instructions is a cryptographic primitive.

11. The integrated circuit card of any of claims 5 to 10, wherein access to said cryptographic primitives is denied when the value of said access flag is set to 0 and is granted when set to 1.

12. In a multiple application card system including an integrated circuit card (108) comprising a microprocessor (112), a read-only memory (126), a random access memory (126) and an electronically erasable programmable read-only memory (128), a method for controlling access to one or more sets of programming instructions stored in said read-only memory comprising:
storing (501) at least one application on said IC card which application accesses at least one of the sets of programming instructions;
storing (503) on said IC card with application control data, an access flag having a value indicating whether or not access by said at least one application to said at least one set of programming instructions shall be granted;
setting the access flag to enable access to the at least one set of programming instructions in dependence on the stored application; and
allowing access (507) to said one or more sets of programming instructions in dependence on said access flag.

13. The method of claim 12, wherein said application resides in said electronically erasable programmable read-only memory.

14. The method of claim 12 or claim 13, wherein at least one set of programming instructions is a cryptographic primitive.

15. The method of any of claims 12 to 14, wherein access to said cryptographic primitives is denied when the value of said access flag is set to 0 and is granted when set to 1.

## Patentansprüche

1. Mehranwendungskartensystem (106) mit einer IC-Chipkarte (108), umfassend einen Mikroprozessor (112), einen Festwertspeicher (124), einen Arbeitsspeicher (126), einen elektronisch löschbaren programmierbaren Festwertspeicher (128) sowie ein oder mehrere Sätze von Programmieranweisungen, die in dem genannten Festwertspeicher gespeichert sind, wobei das System Folgendes umfasst:
Mittel zum Speichern von wenigstens einer Anwendung, die auf wenigstens einen der Sätze von Programmieranweisungen zugreift, auf der genannten IC-Chipkarte (108);
Mittel zum Speichern eines Zugriffsflags mit Anwendungssteuerdaten für wenigstens einen der genannten Sätze von Programmieranweisungen, auf die die Anwendung zugreift;
Mittel zum Setzen des Zugriffsflags, um den Zugriff auf den Satz von Programmieranweisungen in Abhängigkeit von der geladenen Anwendung zu ermöglichen;
und Mittel, die von dem Zugriffsflag abhängig sind, um den Zugriff auf den Satz von Programmieranweisungen durch die Anwendung zu gestatten.

2. System nach Anspruch 1, bei dem sich das genannte Mittel zum Speichern von Zugriffsflags in dem genannten elektronisch löschbaren programmierbaren Festwertspeicher befindet.

3. System nach Anspruch 1 oder Anspruch 2, bei dem wenigstens ein Satz von Programmieranweisungen eine kryptografische Grundstruktur ist.

4. System nach Anspruch 3, bei dem der Zugriff auf die genannten kryptografischen Grundstrukturen verweigert wird, wenn der Wert des genannten Zugriffsflags auf 0 gesetzt ist, und gewährt wird, wenn er auf 1 gesetzt ist.

5. IC-Chipkarte, die Folgendes umfasst:
einen Mikroprozessor (112);
wenigstens einen Speicher (114), der mit dem genannten Mikroprozessor gekoppelt ist, um wenigstens ein Anwendungsprogramm zu speichern, das auf einen oder mehrere Sätze von Programmieranweisungen zugreift, und wenigstens einen Zugriffsflag, der mit den Anwendungssteuerdaten gespeichert wird und mit wenigstens einem der genannten ein oder mehreren Sätze von Programmanweisungen assoziiert ist; und
ein Mehranwendungsbetriebssystem, das auf der genannten IC-Chipkarte gespeichert ist und von dem genannten Mikroprozessor ausgeführt wird, um den Zugriff auf die genannten ein oder mehreren Sätze von Programmanweisungen als Reaktion auf den Wert des genannten assoziierten Zugriffsflags zu ermöglichen.

6. IC-Chipkarte nach Anspruch 5, bei der die genannten wenigstens einen Zugriffsflags in einem Festwertspeicher gespeichert sind.

7. IC-Chipkarte nach Anspruch 5, bei der die genannten ein oder mehreren Sätze von Programmieranweisungen in dem genannten Festwertspeicher gespeichert sind.

8. IC-Chipkarte nach einem der Ansprüche 5 bis 7, bei der die genannte wenigstens eine Anwendung in einem elektronisch löschbaren programmierbaren Festwertspeicher gespeichert ist.

9. IC-Chipkarte nach einem der Ansprüche 5 bis 8, bei der der genannte Zugriffsflag in einem elektronisch löschbaren programmierbaren Festwertspeicher gespeichert ist.

10. IC-Chipkarte nach einem der Ansprüche 5 bis 9, bei der wenigstens ein Satz von Programmieranweisungen eine kryptografische Grundstruktur ist.

11. IC-Chipkarte nach einem der Ansprüche 5 bis 10, bei der der Zugang zu den genannten kryptografischen Grundstrukturen verweigert wird, wenn der Wert des genannten Zugriffsflags auf 0 gesetzt ist, und gewährt wird, wenn er auf 1 gesetzt ist.

12. Verfahren zum Steuern des Zugriffs auf einen oder mehrere Sätze von Programmieranweisungen, die in dem genannten Festwertspeicher gespeichert sind, in einem Mehranwendungskartensystem mit einer IC-Chipkarte (108), umfassend einen Mikroprozessor (112), einen Festwertspeicher (124), einen Arbeitsspeicher (126), einen elektronisch löschbaren programmierbaren Festwertspeicher (128) sowie, wobei das Verfahren die folgenden Schritte umfasst:
Speichern (501) von wenigstens einer Anwendung, die auf wenigstens einen der Sätze von Programmieranweisungen zugreift, auf der genannten IC-Chipkarte;
Speichern (503) eines Zugriffsflags mit Anwendungssteuerdaten auf der IC-Chipkarte, wobei ein Zugriffsflag einen Wert hat, der angibt, ob der Zugriff durch die genannte wenigstens eine Anwendung auf den genannten wenigstens einen Satz von Programmieranweisungen gewährt wird;
Setzen des Zugriffsflags, um den Zugriff auf den wenigstens einen Satz von Programmieranweisungen in Abhängigkeit von der gespeicherten Anwendung zu ermöglichen;
Gestatten des Zugriffs (507) auf die genannten ein oder mehreren Sätze von Programmieranweisungen in Abhängigkeit von dem genannten Zugriffsflag.

13. Verfahren nach Anspruch 12, bei dem sich die genannte Anwendung in dem genannten elektronisch löschbaren programmierbaren Festwertspeicher befindet.

14. Verfahren nach Anspruch 12 oder Anspruch 13, bei dem wenigstens ein Satz von Programmieranweisungen eine kryptografische Grundstruktur ist.

15. Verfahren nach einem der Ansprüche 12 bis 14, bei dem der Zugriff auf die genannten kryptografischen Grundstrukturen verweigert wird, wenn der Wert des genannten Zugriffsflags auf 0 gesetzt ist, und gewährt wird, wenn er auf 1 gesetzt ist.

## Revendications

1. Système de carte à applications multiples (106) ayant une carte de circuit intégré (108) comprenant un microprocesseur (112), une mémoire morte (124), une mémoire vive (126), une mémoire morte programmable effaçable électroniquement (128), et un ou plusieurs jeux d'instructions de programmation mémorisés dans ladite mémoire morte comprenant:
un moyen pour mémoriser sur ladite carte de circuit intégré (108) au moins une application qui sollicite au moins l'un des jeux d'instructions de programmation ;
un moyen pour mémoriser un drapeau d'accès avec des données de commande d'application pour au moins l'un desdits jeux d'instructions de programmation sollicités par l'application ;
un moyen pour mettre sur un le drapeau d'accès afin de permettre l'accès au jeu d'instructions de programmation en fonction de l'application chargée ;
et un moyen dépendant du drapeau d'accès pour permettre l'accès au jeu d'instructions de programmation par l'application.

2. Système selon la revendication 1, dans lequel ledit moyen de mémorisation de drapeaux d'accès réside dans ladite mémoire morte programmable effaçable électroniquement.

3. Système selon la revendication 1 ou la revendication 2, dans lequel au moins un jeu d'instructions de programmation est une primitive cryptographique.

4. Système selon la revendication 3, dans lequel l'accès auxdites primitives cryptographiques est refusé quand la valeur dudit drapeau d'accès est mise sur 0 et accordé quand elle est mise sur 1.

5. Carte de circuit intégré comprenant;
un microprocesseur (112) ;
au moins une mémoire (114) couplée audit microprocesseur pour mémoriser au moins un programme d'application qui sollicite un ou plusieurs jeux d'instructions de programmation et au moins un drapeau d'accès mémorisé avec des données de commande d'application et associé à au moins l'un desdits un ou plusieurs jeux d'instructions de programme ; et
un système d'exploitation d'applications multiples mémorisé sur ladite carte à circuit intégré et exécuté par ledit microprocesseur qui permet l'accès auxdits un ou plusieurs jeux d'instructions de programme en réponse à la valeur dudit drapeau d'accès associé.

6. Carte de circuit intégré selon la revendication 5, dans laquelle lesdits au moins un drapeaux d'accès sont mémorisés dans une mémoire morte.

7. Carte de circuit intégré selon la revendication 5 ou la revendication 6, dans laquelle lesdits un ou plusieurs jeux d'instructions de programmation sont mémorisés dans ladite mémoire morte.

8. Carte de circuit intégré selon l'une quelconque des revendications 5 à 7, dans laquelle ladite au moins une application est mémorisée dans une mémoire morte programmable effaçable électroniquement.

9. Carte de circuit intégré selon l'une quelconque des revendications 5 à 8, dans laquelle ledit drapeau d'accès est mémorisé dans la mémoire morte programmable effaçable électroniquement.

10. Carte de circuit intégré selon l'une quelconque des revendications 5 à 9, dans laquelle au moins un jeu d'instructions de programmation est une primitive cryptographique.

11. Carte de circuit intégré selon l'une quelconque des revendications 5 à 10, dans laquelle l'accès auxdites primitives cryptographiques est refusé quand la valeur dudit drapeau d'accès est mise sur 0 et accordé quand elle est mise sur 1.

12. Dans un système de carte à applications multiples comportant une carte de circuit intégré (108) comprenant un microprocesseur (112), une mémoire morte (124), une mémoire vive (126), une mémoire morte programmable effaçable électroniquement (128), procédé pour commander l'accès à un ou plusieurs jeux d'instructions de programmation mémorisés dans ladite mémoire morte comprenant :
la mémorisation (501) d'au moins une application sur ladite carte de circuit intégré, laquelle application sollicite au moins l'un des jeux d'instructions de programmation ;
la mémorisation (503) sur ladite carte de circuit intégré avec des données de commande d'application, d'un drapeau d'accès ayant une valeur indiquant si l'accès par ladite application audit au moins un jeu d'instructions de programmation sera accordé ou non ;
la mise sur un du drapeau d'accès afin de permettre l'accès à l'au moins un jeu d'instructions de programmation en fonction de l'application mémorisée ; et
l'autorisation de l'accès (507) auxdits un ou plusieurs jeux d'instructions de programmation en fonction dudit drapeau d'accès.

13. Procédé selon la revendication 12, dans lequel ladite application réside dans ladite mémoire morte programmable effaçable électroniquement.

14. Procédé selon la revendication 12 ou la revendication 13, dans lequel au moins un jeu d'instructions de programmation est une primitive cryptographique.

15. Procédé selon l'une quelconque des revendications 12 à 14, dans lequel l'accès auxdites primitives cryptographiques est refusé quand la valeur dudit drapeau d'accès est mise sur 0 et accordé quand elle est mise sur 1.
